# EUROPEAN PATENT APPLICATION

(11) **EP 0 786 387 A2**
(43) Date of publication of application: **30.07.1997**
(21) Application number: 96402593.6
(22) Date of filing: 29.11.1996
(51) Int. Cl.: B60T 8/00

(54) **Method and apparatus for detecting brake force in a vehicle**

(30) Priority: 26.01.1996 US 592687
(71) Applicant: SSI TECHNOLOGIES, INC., Janesville, Wisconsin 53546 (US)
(72) Inventor: Hoekstra, Eric J., Coopersville MI 49404 (US); Sonday. K. Susan, Dearborn MI 48128 (US)
(74) Representative: Jacquard, Philippe Jean-Luc

(57) **Abstract**

A method and apparatus for detecting the brake force in a vehicle having a brake system for stopping the vehicle. The brake system (14) includes a brake (74), a magnetically permeable actuating member (26), and a brake governor (18) connected to the actuating member (26) and to the brake (74) so that the brake governor (18) causes the brake (74) to apply a brake force to the vehicle in response to a force applied to the actuating member (26). The brake system (14) also includes a magnetostrictive sensor (78) mounted on the actuating member (26) to detect the force applied to the actuating member (26).

## Description

### BACKGROUND OF THE INVENTION

The invention relates to vehicle brake systems, and particularly, to a method and apparatus for detecting the force applied to the brake of a vehicle brake system.

It is commonly known in the art to include in a vehicle having a plurality of wheels, tracks or other means of support and propulsion, a brake system for slowing or stopping the wheels, tracks, etc. to result in slowing or stopping of the vehicle. Typically, the brake system includes a hand or foot actuator to allow the vehicle operator to initiate vehicle braking. Most commonly, the actuator includes an actuating member and a brake pedal mounted on the actuating member. The actuating member is connected to a master brake cylinder so that selective movement of the actuating member causes movement of the master cylinder piston, which, in turn, results in selective application of the brakes to the wheels, tracks, etc.

It is also known in the art to connect a resistive strain gauge or resistive pressure pad to the actuating member to detect the force being applied to the actuating member by the vehicle operator. This force is related to actual braking force and, for the purposes of this document, the force applied to the actuator will be referred to as braking force. As the actuating member undergoes stress or strain during braking, the resistive strain gauge or resistive pressure pad generates an electrical signal as the bridge impedances comprising the strain gauge or pressure pad become imbalanced. The derived signal is generally an accurate measure of braking force. One reason for measuring the braking force is to provide a control input to a control mechanism which operates to control the electronic brake system of a trailer being towed by the vehicle. The resistive strain gauges and pressure pads discussed above are used to generate the control input.

### SUMMARY OF THE INVENTION

These strain gauges and pressure pads are difficult to install (particularly in aftermarket applications), are costly, and are prone to failure as repeated stress and strain cycling on the strain gauges or pressure pads causes performance degradation and eventual failure of the strain gauge or pressure pad.

Accordingly, the invention provides a method and apparatus for measuring the braking force, which method and apparatus eliminates the need for the resistive strain gauges of the current technology.

In the preferred embodiment, the invention provides a vehicle having at least one wheel, track, or other means of propulsion, and a brake system for stopping the vehicle. The brake system includes a brake mounted adjacent the wheel, track, etc. The brake is connected via a hydraulic system to a brake governor having a master cylinder. A ferromagnetic or magnetically permeable actuating member is connected to the master cylinder so that, as the vehicle operator engages the actuating member, the master cylinder moves causing a change in the hydraulic pressure within the hydraulic system. The hydraulic pressure change causes the brake to slow or stop the vehicle.

The invention also provides a sensor mounted on the actuating member to measure the force applied to the brake pedal by the vehicle operator. In the preferred embodiment, the sensor is a magnetostrictive sensor including a flux generator for generating a magnetic field having a flux path that extends, at least in part, through the actuating member. The magnetostrictive sensor also includes a secondary or pickup circuit for detecting changes in the magnetic field generated by the flux generator and for generating an electrical output in response thereto. Because of the magnetostrictive properties of the actuating member, i.e., because the magnetic permeability of the actuating member changes in response to changing stress/strain applied to the actuating member, application of force to the actuating member causes a change in the magnetic field detected by the secondary circuit.

The invention also includes signal conditioning circuitry connected to the magnetostrictive sensor to receive the magnetostrictive sensor output and produce in response to that output an electrical signal indicative of the force applied to the actuating member by the vehicle operator.

The invention also provides a method for determining the force applied to the actuating member of a vehicle braking system. The method includes the steps of providing an actuating member for engaging the brakes of the vehicle, inducing a magnetic field in the actuating member, and providing a secondary circuit for measuring changes in the induced magnetic field, which changes are indicative of the force applied to the actuating member.

A principal advantage of the invention is the provision of a magnetostrictive sensor for measuring brake force of a vehicle without using conventional resistive strain gauge transducers.

Another advantage of the invention is the provision of a method for measuring the brake force of a vehicle without using conventional resistive strain gauge transducers.

Other features and advantages of the invention are set forth in the following detailed description, drawings and claims.

### DESCRIPTION OF THE DRAWINGS

Fig. 1 is a diagrammatic view of a vehicle showing a brake system in the vehicle.

Fig. 2 is a partial view of the actuating member of the vehicle brake system including a sensor mounted on the actuating member.

Fig. 3 is a cross-section of the sensor taken along line 3-3 in Fig. 2.

Fig. 4 is a cross-section of the sensor taken along line 4-4 in Fig. 2.

Fig. 5 is a partial view of the sensor showing the housing in phantom without a conducting cable, and showing the flux generator and pickup circuit in the housing.

Fig. 6 is an electronic schematic of the brake pedal force sensor and signal conditioning circuitry.

Before one embodiment of the invention is explained in detail, it is to be understood that the invention is not limited in its application to the details of construction and the arrangement of components set forth in the following description or illustrated in the drawings. The invention is capable of other embodiments and of being practiced or being carried out in various ways. Also, it is to be understood that the phraseology and terminology used herein is for the purpose of description and should not be regarded as limiting.

### DETAILED DESCRIPTION OF THE PREFERRED EMBODIMENT

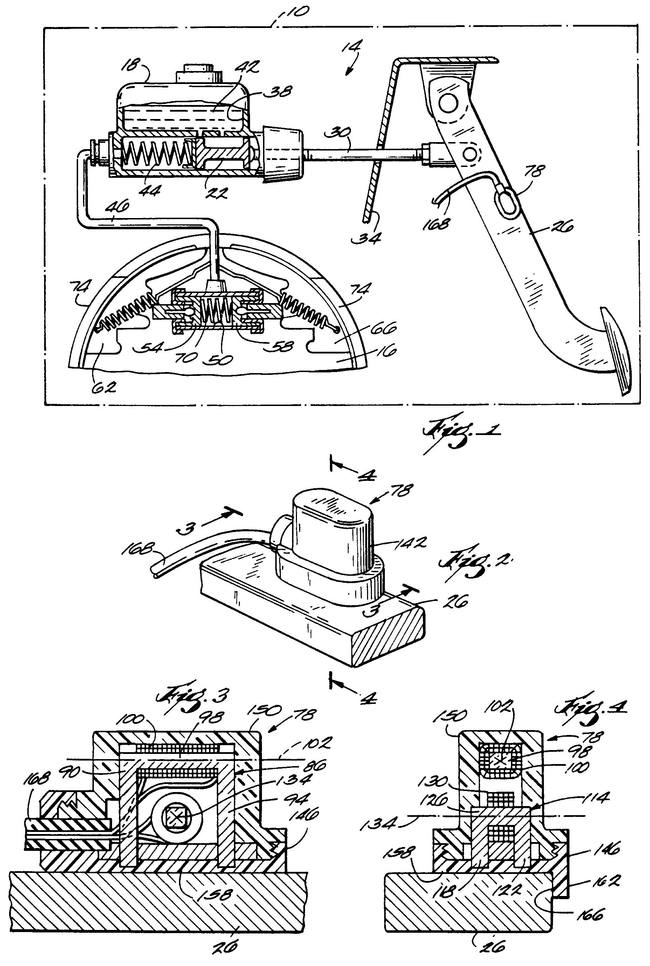

Illustrated in Fig. 1 of the drawings is a diagrammatic view of a vehicle 10 showing a portion of a brake system 14 for the vehicle 10. The vehicle 10 of the preferred embodiment is an automobile or truck typically having a frame (not shown) including a plurality of wheel end housings 16 (only one of which is shown in Fig. 1). A wheel (also not shown) is rotatably mounted on each of the wheel end housings to support the frame on a traveling surface and allow the vehicle 10 to move along the surface. As is commonly known in the art, the vehicle 10 also includes a power plant (not shown) for providing energy to propel the vehicle 10 along the traveling surface. While the invention is described in the context of a wheeled vehicle, the invention is equally applicable to other types of vehicles, such as those that have tracks or other means of support. Also, the power plant may be an internal combustion engine or electric motor connected to the wheels through a drive train or may be a jet or turbine for providing a driving force to the vehicle 10 without having a direct connection to the wheels. Moreover, though the invention is shown and described in the context of measuring the braking force applied by a vehicle operator to a brake system, the invention could also be used to measure the force applied by a vehicle operator to an accelerator, clutch or other vehicle operator actuated lever or member.

The brake system 14 shown in the drawings is a hydraulic drum brake. However, the invention is equally applicable to various kinds of vehicle brake systems such as, for example, power brakes, air brakes, electric brakes, drum brakes, etc., as long as the brake system includes an actuating member or lever to be engaged by the operator of the vehicle 10 to initiate braking of the vehicle 10. The brake system 14 includes a brake governor or master cylinder 18. The master cylinder 18 houses a master cylinder piston 22 which is connected at one end to an actuating member 26 via a push rod 30. In the most common arrangement (shown in Fig. 1), the actuating member 26 is mounted beneath the dashboard (not shown) of the vehicle 10 and in front (to the right in Fig. 1) of the fire wall 34 for easy engagement by the foot of the vehicle operator. The master cylinder 18 includes a reservoir 38 filled with brake fluid 42. Spring 44 is positioned in master cylinder 18 to bias piston 22 to a resting position. The master cylinder 18 is connected adjacent the opposite end of the piston 22 to a hydraulic brake line 46. The brake line 46 communicates with a brake cylinder 50 housing a pair of brake pistons 54 and 58 that move linearly within the brake cylinder 50. As is commonly known in the art, the brake cylinder 50 is mounted on the wheel end housing 16. Brake pistons 54 and 58 are connected to brake shoes 62 and 66, respectively, and a retaining spring 70 is connected to the brake pistons 54 and 58 to bias the brake pistons 54 and 58 toward one another.

The brake system 14 also includes a brake drum 74 connected to the rotating wheel (not shown). Engagement of the actuating member 26 by the vehicle operator moves the push rod 30 and the master cylinder piston 22 against the bias force of spring 44 to force brake fluid through brake line 46 thereby increasing the hydraulic pressure in the brake line 46. The increase in the hydraulic pressure in the brake line 46 forces the brake pistons 54 and 58 to apply the brake shoes 62 and 66 to the brake drum 74 thereby braking the wheel. As soon as the push rod 30 is released, the Spring 44 in the master cylinder 18 forces the master cylinder piston 22 to its resting position thereby reducing the hydraulic pressure in the brake line 46 allowing spring 70 to bias brake pistons 54 and 58 to their resting position thereby retracting the brake shoes 62 and 66 from engagement with the brake drum 74.

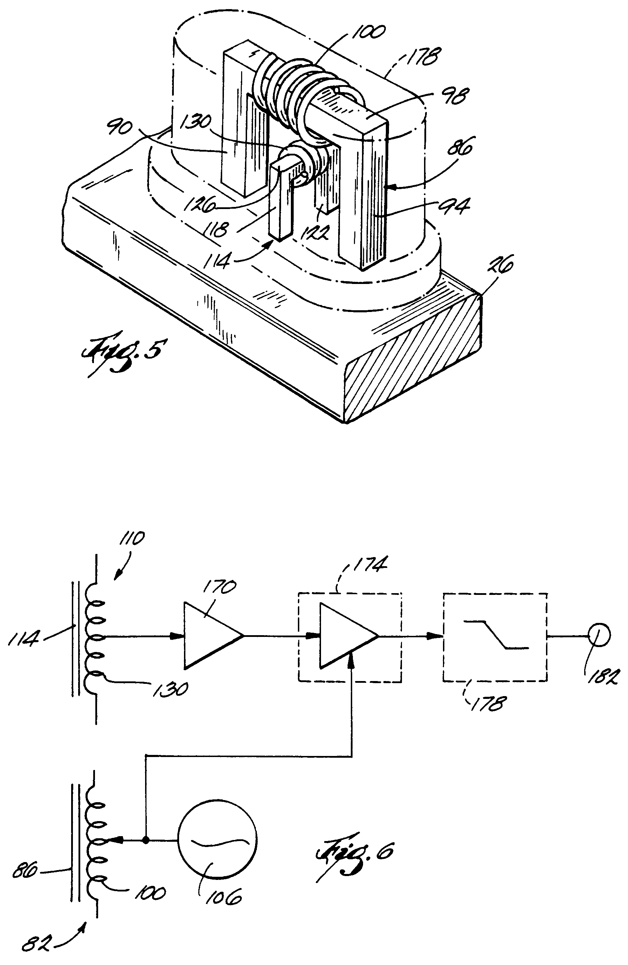

The brake system 14 includes a magnetostrictive sensor 78 mounted on the actuating member 26. As a possible alternative, the magnetostrictive sensor 78 could be mounted on the push rod 30 or any other connecting link between the actuating member and the master cylinder piston 22. Various magnetostrictive sensors including cross design sensors and single branch design sensors are appropriate. Two such magnetostrictive sensors are shown in U.S. Patent Nos. 2,912,642 and 4,716,773, the subject matter of which is incorporated herein by reference. The magnetostrictive sensor 78 of the preferred embodiment is a cross design magnetostrictive sensor. As illustrated in Figs. 3-6, the magnetostrictive sensor 78 includes a flux generator 82 (Fig. 6). The flux generator 82 generates a magnetic field that extends, at least in part, through the actuating member 26, that is, the flux generator 82 induces a magnetic field in the actuating member 26. The flux generator 82 can be any means for generating a magnetic field including, for example, a permanent magnet. In the preferred embodiment, the flux generator 82 includes (see Figs. 3 and 5) a U-shaped ferromagnetic core 86 having side portions 90 and 94 and a cross member 98 extending between and connecting the side portions 90 and 94. The flux generator 82 also includes an inductive drive coil 100 wound around the cross member 98. The drive coil 100 has an axis 102 (Fig. 3) which extends through the cross member 98. As shown in Fig. 6, the drive coil 100 is connected to an alternating current drive source 106. The drive source 106 provides electrical power to the drive coil 100 to generate the magnetic flux field.

The sensor 78 also includes a secondary or pickup circuit 110 (Fig. 6). The secondary circuit 110 is an electromagnetic circuit or transducer capable of detecting a magnetic field and generating from that magnetic field an electrical output. Suitable examples of such transducers include Hall effect devices, giant magnetoresistive ("GMR") devices, and magnetoresistive ("MR") devices. In the preferred embodiment, the transducer includes (see Figs. 4 and 5) a U-shaped ferromagnetic core or pole-piece 114 having side portions 118 and 122 and a center portion 126 extending between and connecting the side portions 118 and 122. An electrical conductor (preferably copper) is wound around the center portion to form an inductive coil 130. The coil 130 has an axis 134 which extends through the center portion 138. In the preferred embodiment, the axis 102 and the axis 134 are not parallel, are not collinear, and do not intersect, but lie in respective planes that are transverse with respect to one another.

The sensor 78 also includes (see Figs. 3 and 4) a housing 142 for supporting the flux generator 82 and the secondary circuit 110. The housing 142 is preferably a two-piece molded synthetic resin or thermoplastic. As shown in Figs. 4 and 5, the housing 142 includes a mounting portion 146 and a cover portion 150 connected to the mounting portion 146 to form a sealed enclosure. The mounting portion 146 has a mounting surface 158 and a locating key or lip 162 (Fig. 4 only) depending from the mounting surface 158. The lip 162 has an engaging surface 166 for engaging the actuating member 26. As shown in Fig. 4, the engaging surface 166 and the mounting surface 158 together "wrap" around a portion of the outer surface of the actuating member 26 to accurately position the flux generator 82 and the secondary circuit 110 over the actuating member 26 so that the magnetic field generated by the flux generator 82 extends through the actuating member 26 and so that the secondary or pick-up circuit 110 is accurately positioned so as to be able to measure the induced magnetic field extending through the actuating member 26. The housing 142 is secured to the actuating member 26 using a variety of appropriate means such as glue, tie wraps, integrally molded clips or other features, screws or bolts (none of which are shown).

The sensor 78 also includes a conducting cable 168 extending through the housing 142 to connect the flux generator 82 and secondary circuit or pickup circuit 110 to a driver circuit and signal conditioning circuitry, respectively. While the signal conditioning circuit is described as being separate from the sensor, it is equally acceptable to package the signal conditioning circuitry within the housing 142 along with the flux generator 82 and the pickup circuit 110.

As shown in Fig. 6, the signal conditioning circuit includes a preamplifier 170 connected to the pickup circuit 110. The output of preamplifier 170 is connected to a demodulator 174 which is also connected to the energy source 106. The output of demodulator 174 is connected to low-pass filter 178, which produces an output at node 182.

In operation, the alternating current energy source 106 generates an alternating current signal in the drive coil 100, which in turn generates a magnetic field having a flux path that extends through the actuating member 26 of the brake system 14, i.e., a magnetic field flux is induced in the actuating member 26. The flux path of the magnetic field also generates or induces a voltage in the pickup circuit 110. The generation of voltage in the pickup circuit allows detection of the magnetic field as well as detection of changes in the characteristics of the magnetic field. The voltage in the pickup circuit 110 is amplified by the preamplifier 170, rectified by the demodulator 174, and filtered by low-pass filter 178 to produce an analog output at node 182. The connection of the energy source 106 to the demodulator 174 allows a comparison of signal characteristics between the output generated by the pickup circuit 110 and the energy source 106 driving the drive coil 100. In particular, the phase shift between the output of the pickup circuit 110 and the energy source 106 and the amplitude of the output is detected. This phase shift and amplitude is indicative of the stress (bending force, tension, and/or compression) on the actuating member.

As the operator of the vehicle 10 presses on the brake pedal to move the actuating member 26 and cause braking of the vehicle 10, a stress is induced on the actuating member 26. This stress causes a change in the magnetic permeability of the actuating member 26, which in turn causes a change in the characteristics of the magnetic field. The change in the characteristics of the magnetic field induces a change in the voltage generated in the pickup circuit and this change is seen at the electrical output of the pickup circuit 110 and accordingly, at the output 182 of the filter 178. The output is indicative of the braking force applied to the actuating member 26. This braking force output can be used for various purposes such as, for example, a control output for operating the braking system of a trailer being pulled by a vehicle.

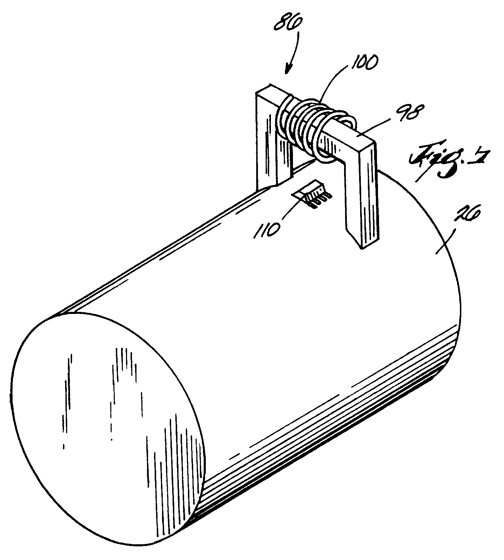

Fig. 7 illustrates a partial view of another embodiment of the sensor employing a GMR or MR device (in the form of a dual-in-line package) as the pickup circuit 110. Like parts are identified using like reference numerals and Fig. 7 does not show a housing or any support structure for the flux generator, for the pickup circuit 110, or for the actuating member 26. It should be noted that the flux generator 86 and the pickup circuit 110 may be housed in a single housing 178 (as shown in Fig. 5) or may be housed in separate housing structures. As shown in Fig. 7, when a GMR or MR device is used, a single branch design coil is used as the flux generator 86.

In another embodiment (not shown), the actuating member 26 could be coated with an alloy such as an amorphous metallic alloy to enhance the magnetostrictive properties of the actuating member 26 and thereby enhance the performance of the sensor 78. Suitable examples of such alloys include Metglas Material #SA-1 (commercially available from Allied Signal, Inc.), SAE 9310, maraging steel, or permalloy.

Various features and advantages of the invention are set forth in the following claims.

## Claims

**1.** A vehicle comprising:
a vehicle having a frame supporting the vehicle on a traveling surface;
a brake for stopping the vehicle;
a magnetically permeable actuating member connected to the brake so that movement of said actuating member causes said brake to apply a brake force to said vehicle in response to a force applied to said actuating member; and
a magnetostrictive sensor mounted on said actuating member to detect said force applied to said actuating member.

**2.** The vehicle of claim 1 wherein said magnetostrictive sensor includes a flux generator for generating a magnetic field extending, at least in part, through said actuating member, and a secondary circuit for generating an electrical output in response to said magnetic field.

**3.** The vehicle of claim 1 wherein said magnetostrictive sensor includes a drive coil magnetically coupled to a pickup coil.

**4.** The vehicle of claim 3 wherein said drive coil has an axis and wherein said pick-up coil has an axis, and wherein said axis of said drive coil is transverse to said axis of said pickup coil.

**5.** The vehicle of claim 1 further comprising a signal conditioning circuit for generating a voltage output corresponding to the magnitude of said applied force.

**6.** The vehicle of claim 5 wherein said circuit includes an amplifier, a rectifier, and a low pass filter.

**7.** The vehicle of claim 1 wherein said sensor includes a housing having a mounting surface which engages said actuating member and having a locating key for positioning said sensor on said actuating member.

**8.** A brake system for stopping a vehicle, said brake system comprising:
a brake;
a magnetically permeable actuating member mounted on said vehicle;
a brake governor connected to said actuating member and to said brake, said governor causing said brake to apply a brake force to said vehicle in response to a force applied to said actuating member; and
a magnetostrictive sensor mounted on said actuating member to detect said force applied to said actuating member.

**9.** The brake system of claim 8 wherein the magnetostrictive sensor includes a flux generator for generating a magnetic field extending, at least in part, through the actuating member, and a secondary circuit for generating an electrical output in response to said magnetic field.

**10.** The brake system of claim 8 wherein said magnetostrictive sensor includes a drive coil and a pickup coil.

**11.** The vehicle of claim 10 wherein said drive coil has an axis and wherein said pick-up coil has an axis, and wherein said axis of said drive coil is transverse to said axis of said pickup coil.

**12.** The brake system of claim 8 further comprising a signal conditioning circuit for generating a voltage output corresponding to the magnitude of said applied force.

**13.** The brake system of claim 12 wherein said circuit includes an amplifier, a rectifier, and a low pass filter.

**14.** The brake system of claim 8 wherein the magnetic permeability of said actuating member is dependent on the force applied to said actuating member and said magnetostrictive sensor detects the change in the magnetic permeability of said actuating member in response to a braking force applied by the vehicle operator.

**15.** A sensor for measuring brake force applied to a vehicle, the vehicle including a brake system having a brake, a magnetically permeable actuating member, and a brake governor connected to the brake and to the actuating member so that a force applied to the actuating member causes braking of the vehicle, said sensor comprising:
a flux generator for generating a magnetic field extending, at least in part, through the actuating member;
a secondary circuit for generating an electrical output in response to said magnetic field; and
a housing which is mounted on said actuating member and which supports at least one of said flux generator and said secondary circuit.

**16.** The sensor of claim 15 wherein said flux generator includes a drive coil.

**17.** The sensor of claim 16 wherein said secondary circuit includes a pickup coil magnetically coupled to said drive coil.

**18.** The sensor of claim 17 wherein said drive coil has an axis and wherein said pickup coil has an axis, and wherein said axis of said drive coil is transverse to said axis of said pickup coil.

**20.** The sensor of claim 15 wherein said housing includes a mounting surface for engaging said actuating member, and said housing includes a locating key for positioning said sensor on said actuating member.

**21.** A method of measuring instantaneous vehicle brake force, said method comprising the steps of:
(A) providing a vehicle having a brake system for stopping the vehicle, said brake system including a magnetically permeable actuating member;
(B) inducing a magnetic field extending, at least partially, through said actuating member; and
(C) detecting changes in said magnetic field, said changes being related to the instantaneous brake force.

**22.** The method of claim 21 wherein said step (C) is accomplished with the use of a magnetostrictive sensor.

**23.** The method of claim 21 wherein said step (B) includes the step of exciting a drive coil mounted on said actuating member with an AC drive signal.

**24.** The method of claim 23 wherein said step (C) includes the step of magnetically coupling a pickup coil to said drive coil, said pickup coil generating a signal related to the instantaneous brake force.

**25.** The method of claim 24 wherein said step (C) further includes the step of amplifying the signal generated by said pickup coil to generate an amplified signal.

**26.** The method of claim 25 wherein said step (C) further includes the step of rectifying said amplified signal to produce a rectified signal.

**27.** The method of claim 26 wherein said step (C) further includes the step of filtering said rectified signal to produce an electrical signal indicative of instantaneous brake force.
